**Europäisches Patentamt**

**European Patent Office**

**Office européen des brevets**

(19)

(11) **EP 1 400 796 A2**

(12) **EUROPÄISCHE PATENTANMELDUNG**

| | |
|---|---|
| (43) Veröffentlichungstag:<br>**24.03.2004 Patentblatt 2004/13** | (51) Int Cl.⁷: **G01L 9/00**, G01L 9/04 |

(21) Anmeldenummer: 03011318.7

(22) Anmeldetag: **19.05.2003**

| | |
|---|---|
| (84) Benannte Vertragsstaaten:<br>**AT BE BG CH CY CZ DE DK EE ES FI FR GB GR<br>HU IE IT LI LU MC NL PT RO SE SI SK TR**<br>Benannte Erstreckungsstaaten:<br>**AL LT LV MK**<br><br>(30) Priorität: **19.09.2002 DE 10243515**<br><br>(71) Anmelder: **ROBERT BOSCH GMBH**<br>**70442 Stuttgart (DE)** | (72) Erfinder:<br>• **Benzel, Hubert**<br>**72124 Pliezhausen (DE)**<br>• **Pinter, Stefan**<br>**72762 Reutlingen (DE)**<br>• **Grutzeck, Helmut**<br>**72127 Maehringen (DE)** |

(54) **Kraft- und Drucksensor**

(57)     Es wird ein Sensor (10) zur Messung einer Kraft (20) vorgeschlagen, wobei die Kraft (20) auf eine Kraft-membran (22) eine Druckmembran (50) zwischen einem ersten Volumen (100) und einem zweiten Volumen (200) auslenkt.

FIG. 1

EP 1 400 796 A2

## Beschreibung

Stand der Technik

Die Erfindung geht aus von einem Sensor nach der Gattung der nebengeordneten Ansprüche. Allgemein ist es bekannt, zur Messung von Kräften die Wandlerprinzipien einer Wegmessung bzw. einer Spannungsmessung zu verwenden. Die Auswertung erfolgt bei der Spannungsmessung beispielsweise piezoresistiv und bei dem Wegprinzip optisch, kapazitiv oder induktiv.

Vorteile der Erfindung

Der erfindungsgemäße Sensor mit den Merkmalen der nebengeordneten Ansprüche hat demgegenüber den Vorteil, dass zur Messung einer Kraft oder eines Fluiddruckes (Gas oder Flüssigkeit) die Messung eines Druckes in einem abgeschlossenen Volumen herangezogen werden kann. Die Messung eines Druckes in einem abgeschlossenen Volumen ist mit einfachen Mitteln leicht realisierbar, weshalb ein solcher Sensor besonders kostengünstig herstellbar ist. Weiter ist es möglich, zur Darstellung eines erfindungsgemäßen Sensors Standarddrucksensoren mit ihrer Auswerteelektronik zu verwenden, was weiterhin die Herstellungskosten des erfindungsgemäßen Sensors reduziert. Besonders vorteilhaft ist, dass der erfindungsgemäße Sensor sowohl positive als auch negative Kräfte messen kann. Negative Kräfte sind in diesem Fall Kräfte in einer vorgegebenen Richtung, die anders herum orientiert sind als positive Kräfte. Weiterhin ist es bei dem erfindungsgemäßen Sensor so, dass die Empfindlichkeit des erfindungsgemäßen Sensors leicht über dem Gasdruck in dem abgeschlossenen Volumen sowie über die Größe des Volumens oder der Membranparameter (insbes. Durchmesser und Dicke ) einstellbar ist. Weiterhin ist es möglich, zur Überprüfung der Plausibilität von Messungen einen Selbsttest durchzuführen, beispielsweise dann, wenn das Messvolumen ein Leck aufweist. Weiterhin ist von Vorteil, dass der Messbereich für die zu messenden Kräfte über die Auslegung der mechanisch deformierbaren Teile, das heißt insbesondere durch den Membrandurchmesser der Kraftmembran und deren Dicke, einstellbar ist. Weiterhin ist es auch möglich, einen erfindungsgemäßen Sensor zur Messung von Drücken, insbesondere von hohen Drükken, zu verwenden.
Ein weiterer Vorteil ist es, dass die Kraftmembran medienbeständig gestalten werden kann.
Durch die in den Unteransprüchen aufgeführten Maßnahmen sind vorteilhafte Weiterbildungen und Verbesserungen des im Hauptanspruch angegebenen Sensors möglich. Besonders vorteilhaft ist, dass das erste Volumen und das zweite Volumen im Wesentlichen die gleiche Temperatur aufweisen. Dadurch wirkt eine Temperaturänderung, die zu einer Änderung des Druk-

kes in den abgeschlossenen Volumina führt, nicht zu einer Verfälschung der Messwerte. Weiterhin ist es von Vorteil, dass die Volumina durch Verschweißung mit oder ohne ein vorheriges Klemmen, hermetisch abgeschlossen sind. Dadurch ist es möglich, die in den Volumina eingeschlossenen Fluide, das heißt insbesondere Gase, besonders sicher und gegen die Bildung von Lecks geschützt vorzusehen. Weiterhin ist es von Vorteil, dass ein mechanischer Anschlag vorgesehen ist. Hierdurch ist ein Kraftüberlastschutz bzw. ein Drucküberlastschutz realisierbar. Weiterhin ist es von Vorteil, dass mit der Druckmembran ein Dehnmessstreifen verbunden ist. Dadurch ist es möglich, in besonders einfacher Weise und besonders kostengünstig den erfindungsgemäßen Sensor herzustellen.

Zeichnungen

Ein Ausführungsbeispiel der Erfindung ist in der Zeichnung dargestellt und in der nachfolgenden Beschreibung näher erläutert.
Es zeigen:

Figur 1: Eine Prinzipskizze zur Verdeutlichung des Sensorprinzips des erfindungsgemäßen Sensors,

Figur 2: eine beispielhafte erste Ausführungsform des erfindungsgemäßen Sensors,

Figur 3: eine beispielhafte zweite Ausführungsform des erfindungsgemäßen Sensors in einer Querschnittsansicht und in einer Draufsicht,

Figur 4: eine Querschnittsansicht der zweiten Ausführungsform des erfindungsgemäßen Sensors und

Figur 5: eine Querschnittsansicht einer dritten Ausführungsform des erfindungsgemäßen Sensors.

Beschreibung der Ausführungsbeispiele

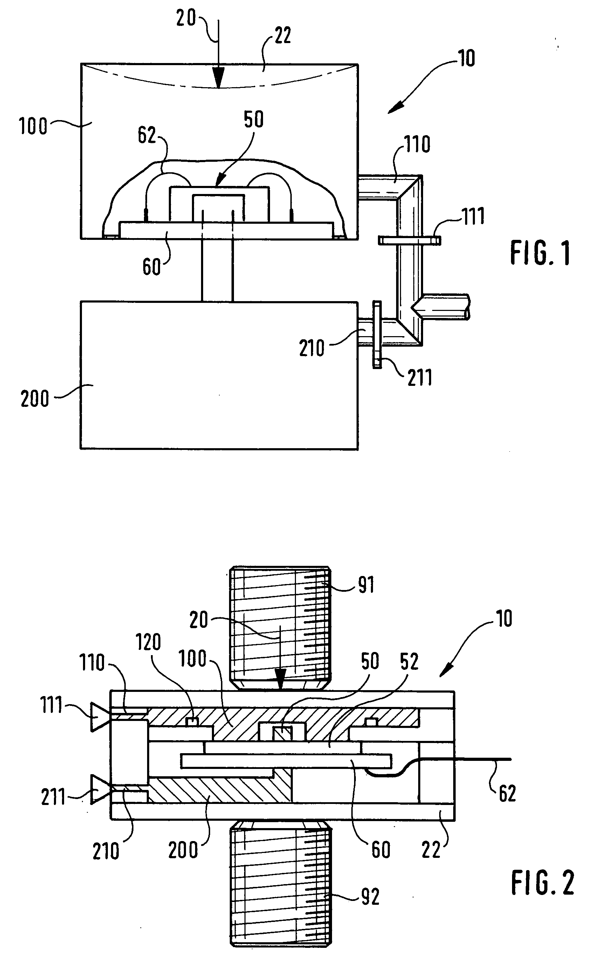

In Figur 1 ist eine Prinzipskizze zur Darstellung des erfindungsgemäßen Messprinzips dargestellt. Der erfindungsgemäße Sensor ist in den Figuren mit dem Bezugszeichen 10 bezeichnet und umfasst ein erstes Volumen 100 und ein zweites Volumen 200. Die Volumina 100, 200 sind hermetisch abgeschlossen und umfassen ein Fluid, insbesondere ein Gas, weshalb sie im Folgenden auch als Gasvolumina 100, 200 bezeichnet werden. Das erste Volumen 100 befindet sich in einem elastisch durch äußere Kräfte deformierbaren Festkörper. Die äußere Kraft, die den das erste Volumen 100 umschließenden Körper deformiert, ist in Figur 1 mit einem mit dem Bezugszeichen 20 bezeichneten Pfeil dargestellt. Die Deformation des in Figur 1 nicht mit einem Bezugszeichen bezeichneten, das erste Volumen 100 umschließenden Körper ist durch eine gestrichelte Linie im Bereich des Pfeils 20 dargestellt. Die Deformation des Körpers führt zu einer Druckänderung im ersten Volumen 100. Da der Gasdruck in dem ersten Volumen 100 nach dem Gasgesetz temperaturabhängig ist, wird zur Kompensation ein Referenzvolumen verwendet. Das Referenzvolumen ist das zweite Volumen 200. Zur Ermittlung der von außen einwirkenden Kraft 20 wird der Differenzdruck zwischen den beiden Volumina 100, 200 durch einen Gasdrucksensor gemessen, der erfindungsgemäß als Relativdrucksensor vorgesehen ist und eine Druckmembran 50 umfasst. Zur Messung des Relativdrucks ist die Druckmembran 50 vorgesehen, auf deren einen Seite der Druck im ersten Volumen 100 wirkt und auf dessen zweiten Seite der Druck des zweiten Volumens 200 wirkt.

Durch die äußere Kraft 20 wird das erste Volumen 100 deformiert, was zu einer Volumenänderung und damit auch zu einer Druckänderung in dem geschlossenen Volumen 100 bzw. in der geschlossenen Kaverne bzw. im geschlossenen Festkörper führt, die bzw. der das erste Volumen 100 umschließt. Für kleine Deformationen, das heißt für kleine Auslenkungen der Membran 22 des Festkörpers bzw. der Festkörpermembran 22, die im folgenden auch als Kraftmembran 22 bezeichnet wird, ist die Proportionalität zwischen Einwirken der Kraft 20 und der Volumenänderung bzw. Druckänderung gegeben.. Der Drucksensor weist insbesondere die Druckmembran 50 auf, welche durch die Änderung des relativen Druckes zwischen dem ersten Volumen 100 und dem zweiten Volumen 200 ausgelenkt wird. Die Auslenkung der Membran 50 ist über in Figur 1 nicht dargestellte Sensorelemente sensierbar und daraus resultierende elektrische Signale werden über Anschlussleitungen 62 zu einer Leiterplatte 60 weitergeleitet, wo die Signale der Sensorelemente, die sich auf der Druckmembran 50 befinden, ausgewertet bzw. weitergeleitet werden. Die Auslegung der mechanischen Deformation der Kraftmembran 22 ist entsprechend der zu messenden äußeren Kraft 20 und des Messbereichs des Relativdrucksensors, dessen Membran die Druckmembran 50 ist, vorzunehmen.

Aus montagetechnischen Gründen ist es erfindungsgemäß insbesondere vorgesehen, dass sowohl das erste Volumen 100 als auch das zweite Volumen 200 bzw. Referenzvolumen 200 erst nach einem Schweißprozess bzw. nach Schweißprozessen hermetisch verschlossen werden. Für diesen hermetischen Verschluss können z.B. nach außen geführte, offene Röhrchen dienen, welche in Figur 1 das Bezugszeichen 110 für das erste Volumen 100 bzw. das Bezugszeichen 210 für das zweite Volumen 200 tragen. Die Röhrchen 110, 210 können durch vorheriges Klemmen und anschließendem Schweißen zusammengeschweißt werden. Beim Verschluss, insbesondere durch Schweißen, kann der Gasdruck in den Volumina 100, 200 eingestellt werden. Ist der Gasdruck in beiden Volumina gleich, so führt eine Temperatureränderung nicht zu einem Druckunterschied zwischen beiden Volumina, das heißt es gibt keinen Temperaturgang des Offsets. Der absolute Druck in beiden Volumina steigt bzw. fällt jedoch gleichermaßen. Dadurch ergibt sich bei einer Temperaturänderung in beiden Volumina 100, 200 und damit einer Druckänderung in beiden Volumina 100, 200 eine Veränderung der Druckänderung pro Einwirken der Kraft 20. Dies bedeutet, dass es einen Temperaturgang der Empfindlichkeit des erfindungsgemäßen Sensors 10 gibt. Dieser Temperaturgang der Empfindlichkeit des erfindungsgemäßen Sensors 10 kann thermodynamisch berechnet und beim Abgleich des im erfindungsgemäßen Sensor 10 verbauten Relativdrucksensors berücksichtigt werden. Die Empfindlichkeit kann über den in den Volumina 100, 200 eingestellten Gasdruck beeinflusst werden.

Ein geeignet eingestellter Druck zwischen der Außenumgebung und den Volumina 100, 200 führt bei einem Leck in einem der Volumina 100, 200 zu unplausiblen Messwerten, beispielsweise zu Werten außerhalb des Messbereichs. Solche unplausiblen Messwerte können dann zur Überprüfung der Funktionsfähigkeit des erfindungsgemäßen Sensors 10 herangezogen werden, indem beispielsweise bei einem Selbsttest einer solchen Plausibilitätsprüfung durchgeführt wird.

Mit dem Gasgesetz, welches durch die folgende Formel

$$(p+dp) * (V+dV) = const$$

beschrieben wird, ergibt sich , dass das eigentliche Sensorvolumen V, das heißt das erste Volumen 100, minimiert werden sollte, um eine große Druckänderung dp zu erreichen. In der obigen Formel steht außerdem p für den Druck im ersten Volumen 100 und dV für die Volumenänderung des ersten Volumens 100.

In Figur 2 ist ein erstes Ausführungsbeispiel einer erfindungsgemäßen Sensoranordnung dargestellt. Mit 91 und 92 ist z.B. jeweils ein Gewindestift bezeichnet, welcher oben und unten mit der erfindungsgemäßen Sensoranordnung 10 verbunden ist. Die eigentliche Sensoranordnung 10 umfasst die Kraftmembran 22, welche an das erste Volumen 100 angrenzt. Das erste Volumen 100 ist über einen Kanal 110, welcher auch als Röhrchen 110 ausgeführt werden kann, mit der Außenwelt verbunden und mit einem Verschlussmittel 111 verschlossen. Erfindungsgemäß ist es jedoch durchaus auch vorgesehen, dass kein solcher Kanal bzw. solches Röhrchen vorgesehen ist, sondern dass das erste Volumen 100 schlicht durch das selbst kein eigenes Bezugszeichen tragende Gehäuse der Sensoranordnung 10 umschlossen wird. Weiterhin weist das Gehäuse der erfindungsgemäßen Sensoranordnung 10 eine Aussparung für das zweite Volumen 200 auf, welches im dargestellten Ausführungsbeispiel ebenfalls ein Verbindungsgang 210 bzw. ein Röhrchen 210 mit einem Verschlussmittel 211 aufweist, was jedoch generell bei der erfindungsgemäßen Sensoranordnung 10 nicht zwingend erforderlich ist. Das Gehäuse der Sensoranordnung 10 ist derart gestaltet, dass das erste Volumen 100 und das zweite Volumen 200 Zugang zu zwei unterschiedlichen Seiten der Druckmembran 50 haben und so auf diese wirken. Die Druckmembran 50 ist Teil eines in der erfindungsgemäßen Sensoranordnung verbauten Relativdrucksensors, wobei der Relativdrucksensor mit seiner Druckmembran 50 auf einem Sensorsockel 52 aufgebaut vorgesehen ist. Weiterhin ist der Sensorsockel 52 im Ausführungsbeispiel der Figur 2 mit einer Leiterplatte 60 verbunden, von welcher aus elektrische Anschlussleitungen 62 die Sensoranordnung 10 elektrisch mit der Außenwelt verbinden. Der erste Gewindestift 91 dient zur Einleitung der Kraft 20 auf die Kraftmembran 22.

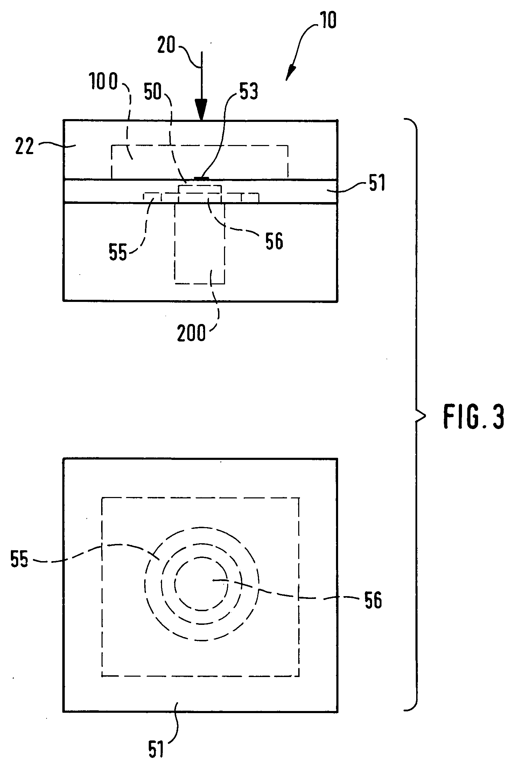

In Figur 3 ist ein zweites Ausführungsbeispiel des erfindungsgemäßen Sensors 10 dargestellt. Beim zweiten Ausführungsbeispiel des erfindungsgemäßen Sensors 10 ist die Verwendung von Foliendehnmessstreifen dargestellt. Die Dehnmessstreifen sind mit dem Bezugszeichen 53 in Figur 3 bezeichnet und befinden sich auf der Druckmembran 50. Hierbei dienen die Dehnmessstreifen 53 als Messelement der Verformung der Druckmembran 50. Ansonsten ist auch beim zweiten Ausführungsbeispiel in der Figur 3 eine zu messende Kraft oder Mediendruck 20 vorgesehen, welche auf die deformierbare Kraftmembran 22 wirkt. Die deformierbare Kraftmembran 22 ist mit dem ersten Volumen 100 verbunden, welches auf die eine Seite der Druckmembran 50 wirkt. Auf der anderen Seite der Druckmembran wirkt die Druckkraft des zweiten Volumens 200. Erfindungsgemäß ist beim zweiten Ausführungsbeispiel die Druckmembran 50 in einer Sensorebene 51 vorgesehen, wobei die Sensorebene 51 auch als Folie 51 bezeichnet wird. Die Foliendehnmessstreifen bestehen aus der Trägerfolie 51 mit einem darauf aufgebrachten Dehnmessstreifen. Bei der Trägerfolie kann es sich hierbei um eine Metallfolie oder um eine Kunststofffolie, oder auch um eine Siliziummembran handeln. Die Verwendung einer Metallfolie als Träger der Dehnmessstreifen-Struktur hat den Vorteil, dass das Gehäuse der Sensoranordnung 10, welches in Figur 3 ebenfalls nicht mit einem Bezugszeichen bezeichnet ist, ebenfalls aus dem gleichen Metall hergestellt werden kann und damit Temperaturausdehnungen keine mechanischen Spannungen in den Materialien verursachen bzw. in diese einbringen. Weiterhin ergibt sich bei diesem Aufbauprinzip des erfindungsgemäßen Sensors 10 generell eine relativ gute Entkopplung gegenüber Querkräften. Die Dehnmessstreifen auf der Druckmembran 50 können hierbei beispielsweise mittels einer Dünnschichttechnik aufgebracht werden. Die Folie, welche zur Realisierung der Druckmembran 50 dient, ist dabei insbesondere derart strukturiert, dass sie auf der einen Seite den Dehnmessstreifen trägt. Zur Steigerung der Empfindlichkeit kann die Folie von der Rückseite her strukturiert werden, was in Figur 3 mit dem Bezugszeichen 56 bezeichnet ist. Die Strukturierung 56 bzw. die Dehnmessstreifen können wahlweise auf der Seite des ersten Volumens 100 oder auf der Seite des zweiten Volumens 200 angebracht werden. Zur Entkopplung von Differenzen in der Wärmeausdehnung auf das Sensorsignal können zusätzliche rückseitige Strukturierungen, die in Figur 3 mit dem Bezugszeichen 55 versehen, vorgesehen werden. Im unteren Teil der Figur 3 ist eine Draufsicht auf die zweite Ausführungsform der erfindungsgemäßen Sensoranordnung 10 dargestellt, wo die rückseitigen Strukturierungen 55, 56 der Folie 51 in der Draufsicht erkennbar sind. Die Dehnmessstreifen 53 sind im unteren Teil der Figur 3 nicht sichtbar.

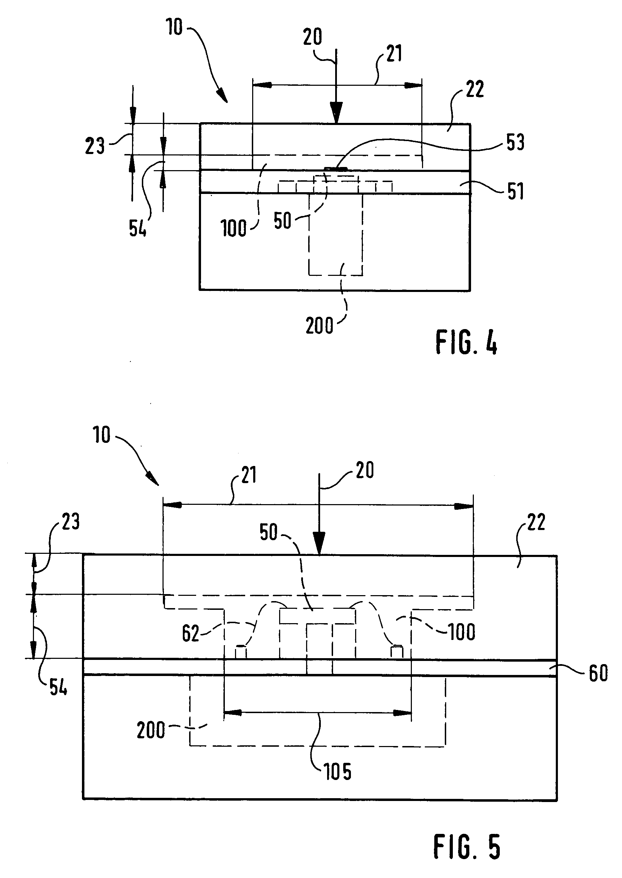

In Figur 4 ist eine weitere Querschnittsabbildung der zweiten Ausführungsform der erfindungsgemäßen Sensoranordnung 10 dargestellt. Außer der zu messenden Kraft 20, dem ersten Volumen 100, dem zweiten Volumen 200, der Folienschicht 51, der Druckmembran 50 und des als Dehnmessstreifen 53 vorgesehenen Messelements ist in Figur 4 noch die wirksame Breite 21 der Krafteinwirkung 20 auf die Kraftmembran 22 dargestellt sowie die wirksame Dicke 23 der Kraftmembran 20 und die wirksame Höhe 54 des ersten Volumens 100. Für eine wirksame Breite 21 bzw. in eines wirksamen Durchmessers 21 für die Einleitung der Kraft 20 auf die Kraftmembran 22 von beispielsweise 5 mm ist es erfindungsgemäß beispielsweise vorgesehen, dass die Kraft 20 lediglich in einem Bereich von 80 % der wirksamen Breite 53, das heißt für das angegebene Beispiel im Bereich eines Durchmessers von ca. 4 mm einwirkt. Die Dicke 23 der Kraftmembran 22 ist beispielhaft 0,5 mm groß und die wirksame Höhe des ersten Volumens 100, welche mit dem Bezugszeichen 54 versehen ist, ist erfindungsgemäß beispielhaft 0,05 mm groß. Für dieses Beispiel ergibt sich in einer groben Schätzung eine Druckänderung von 3,6 mbar zwischen dem ersten Volumen 100 und dem zweiten Volumen 200 pro 10 Newton der einwirkenden Kraft 20. Dadurch ist ersichtlich, dass für einen Membran-Foliendrucksensor das erste Volumen 100 besonders gut optimiert werden kann, das heißt dass das erste Volumen 100 besonders klein gebaut werden kann.

In Figur 5 ist ein drittes Ausführungsbeispiel der erfindungsgemäßen Sensoranordnung 10 dargestellt. Wiederum ist das erste Volumen 100, das zweite Volumen 200, die einwirkende Kraft 20, die Kraftmembran 22 und die Druckmembran 50 dargestellt. Weiterhin sind in Figur 5 die elektrischen Verbindungsleitungen 62 zwischen den in Figur 5 nicht dargestellten Sensorelementen auf der Druckmembran 50 und entsprechenden jedoch nicht näher bezeichneten Anschlüssen auf der Leiterplatte 60 dargestellt. Im dritten Ausführungsbeispiel der erfindungsgemäßen Sensoranordnung 10 in Figur 5 ist die Verwendung eines Standard-Niederdrucksensors als Relativdrucksensor vorgesehen. Hier muss das erste Volumen 100 umbaut werden, so dass das erste Volumen 100 nicht so klein gestaltet werden kann wie bei der zweiten Ausführungsform in Figur 4. Wiederum ist die wirksame Breite 21 bzw. der Durchmesser 21 der Krafteinwirkung 20 auf die Kraftmembran 22 dargestellt sowie die wirksame Höhe bzw. Dicke der Kraftmembran 22. Ebenso ist die relevante Höhe 54 für das erste Volumen 100 dargestellt. Für ein spezielles Ausführungsbeispiel, für welches die wirksame Breite 21 beispielhaft 40 mm umfasst, die Dikke 23 der Kraftmembran 22 beispielhaft etwa 1 mm beträgt und bei dem die wirksame Höhe 54 des ersten Volumens 100 etwa 3,5 mm beträgt, ergibt sich eine Druckänderung von lediglich 0,56 mbar pro 10 Newton der einwirkenden Kraft 20. In diesem Beispiel ist noch die in Figur 5 mit dem Bezugszeichen 105 bezeichnete, hauptsächliche Breite des ersten Volumens 100 mit ca. 10 mm angegeben sowie die Höhe des Aufbaus des Relativsensors auf der Leiterplatte 60 mit ca. 3 mm und sein Durchmesser mit ca. 5 mm angegeben, was jedoch in Figur 5 nicht explizit dargestellt ist.

Figur 4 und Figur 5 stellen Varianten mit kleinem bzw. großem Gasvolumen dar. Generell sind zur Anpassung des Ausgangssignals (Druckänderung) alle Parameter, wie z.B. Form und Größe der Gasvolumina sowie Form, Durchmesser, Dicke und Einspannung der Kraftmembran variierbar.

## Patentansprüche

1. Sensor (10) zur Messung einer Kraft (20), **dadurch gekennzeichnet, dass** ein erstes abgeschlossenes Volumen (100) und ein zweites abgeschlossenes Volumen (200) vorgesehen ist, wobei eine Druckmembran (50) vorgesehen ist, auf deren einen Seite der Druck des ersten Volumens (100) wirkt und auf deren zweiten Seite der Druck des zweiten Volumens (200) wirkt, wobei die Kraft (20) auf eine Kraftmembran (22) wirkt und wobei der Druck im ersten Volumen 100 abhängig von der Kraft (20) auf die Kraftmembran (22) ist.

2. Sensor (10) nach Anspruch 1, **dadurch gekennzeichnet, dass** das erste Volumen (100) und das zweite Volumen (200) im Wesentlichen die gleiche Temperatur aufweisen.

3. Sensor (10) nach Anspruch 1 oder 2, **dadurch gekennzeichnet, dass** die Volumina (100, 200) durch Verschweißung mit oder ohne vorheriges Klemmen, hermetisch abgeschlossen sind.

4. Sensor (10) nach einem der vorhergehenden Ansprüche, **dadurch gekennzeichnet, dass** ein mechanischer Anschlag (120) vorgesehen ist.

5. Sensor (10) nach einem der vorhergehenden Ansprüche, **dadurch gekennzeichnet, dass** mit der Druckmembran (50) ein Dehnmessstreifen (53) verbunden ist.

6. Sensor zur Messung eines Druckes, wobei es zur Messung des Druckes vorgesehen ist, eine durch den Druck hervorgerufene Druckkraft auf eine Messfläche mittels eines Sensors (10) zur Messung einer Kraft nach einem der vorhergehenden Ansprüche zu messen.

FIG. 1

FIG. 2

FIG. 3

FIG. 4

FIG. 5